# EUROPÄISCHE PATENTSCHRIFT

(11) **EP 0 300 130 B1**
(45) Veröffentlichungstag und Bekanntmachung des Hinweises auf die Patenterteilung: **29.12.1993**
(21) Anmeldenummer: 88104271.7
(22) Anmeldetag: 17.03.1988
(51) Int. Cl.: G01J 5/06, G01J 5/08

(54) **Infrarot-Strahlungsdetektoreinrichtung**
Infrared radiation detector apparatus
Appareil de détection de rayonnement infrarouge

(30) Priorität: 20.07.1987 DE 3723982
(43) Veröffentlichungstag der Anmeldung: 25.01.1989
(73) Patentinhaber: STEINHEIL OPTRONIK GMBH, D-85737 Ismaning (DE)
(72) Erfinder: Krause, Gerhard, D-8200 Rosenheim/Egarten (DE)
(74) Vertreter: Pätzold, Herbert, Dr.-Ing.

(56) Entgegenhaltungen:
- FR-A- 2 119 201
- FR-A- 2 300 332
- GB-A- 2 119 117
- US-A- 2 813 203
- US-A- 3 040 176

## Beschreibung

Die Erfindung betrifft eine Infrarot-Strahlungsdetektoreinrichtung gemäß dem Oberbegriff des Anspruches 1.

Infrarot-Detektoren erfordern bekanntlich niedrige Betriebstemperaturen zur Erzielung möglichst hoher Detektorempfindlichkeiten. Es ist bekannt, Detektoren in einem doppelwandigen Kühlgefäß anzuordnen. Dabei befinden sich die Infrarot-Detektoren im thermischen Kontakt mit der Bodenfläche der Innenwand, die auf Tieftemperatur gekühlt ist. Die Detektoren werden somit bei tiefen Temperaturen betrieben. Hierbei ist bekannt, in der Umgebung der Detektoren ein Vakuum vorzusehen.

Die DE-A 12 23 585 zeigt einen Infrarot-Detektor, bei dem sich der Detektor in einer Vakuumkammer eines doppelwandigen Kühlgefäßes in Verbindung mit einer Tiefkühleinrichtung befindet. Innerhalb der Vakuumkammer ist eine das Detektorelement rohrförmig umgebende, seitliche Abschirmwand mit einer dem Fenster zugewandten Strahleneintrittsöffnung angeordnet. Durch ein Abbildungssystem wird Strahlung, die von einem Ziel ausgeht, auf das Detektorelement konzentriert. Die bekannte Einrichtung hat den Nachteil, daß nicht nur aus dem Abbildungsstrahlengang, sondern auch von der Seite her Strahlung auf den Detektor gelangen kann, was zu unerwünschten Störungen führt. Bei diesen Störstrahlen handelt es sich um Strahlungen von ungekühlten Komponenten der Detektoreinrichtung und des Gerätes, die hauptsächlich von den Seiten her außerhalb des Empfangswinkels auf den Detektor zum Einfallen kommen.

Durch die GB-A-2 119 117 ist eine insgesamt gekühlte Feldoptik für ungekühlte Infrarot-Teleskope bekannt zur Abbildung der Austrittspupille des Infrarot-Teleskops mit zentral durchbohrtem Hauptspiegel auf eine das Gesichtsfeld des Detektorelementes definierende, gekühlte Ringblende, in deren Ebene die Pupille des optischen Systems liegt und wo das Bild das Objekt total unscharf ist. Die gekühlte Optik enthält einen hinter der Feldblende des Teleskops angeordneten konkaven Feldspiegel, dessen Brennweite und Entfernung zur Feldblende so gewählt ist, daß das Bild der Pupille in unmittelbarer Nähe der Feldblende mit einer zentralen Vignettierung entsteht, die größer oder gleich der Öffnung der Feldblende ist. Zur Ausspiegelung aus dem koaxialen Strahlgang dient ein gegen die optische Achse geneigter Ringspiegel, der unmittelbar hinter der Feldblende angeordnet ist und eine elliptische Bohrung etwa in der Größe des freien Durchtritts der Feldblende besitzt. Die erforderlich große Brennweite des Hauptspiegels liefert zwangsläufig ein entsprechend großes Bild und fordert damit eine entsprechend große Ringblende sowie eine entsprechend große Feldblende. Zur Erreichung der gewünschten Strahlenabschirmung müssen die beiden relativ großen Blenden und die gesonderte optische Einrichtung zwischen den beiden Blenden gekühlt sein, was aber einen erheblichen Raum- und Energieaufwand bedingt.

Durch die US-A-3 040 176 ist eine Meßeinrichtung zur Temperaturkontrolle der Achslager von Eisenbahnwagen mittels eines Infrarotdetektors bekanntgeworden. Die Einrichtung ist so gestaltet, daß wechselnde Umgebungstemperaturen im Bereich der Meßeinrichtung das Meßergebnis nicht verfälschen.

Hierzu ist der Detektor mit einem Teil der Optik in einem geschlossenen inneren Gehäuse untergebracht, das eine Öffnung aufweist, die durch ein für infrarote Strahlung durchlässiges inneres Fenster verschlossen ist. Das innere Fenster liegt zwischen zwei Shutterelementen, die normal verschlossen gehalten werden und zur Durchführung einer Messung beide gleichzeitig geöffnet werden. Das innere Gehäuse befindet sich innerhalb eines geschlossenen äußeren Gehäuses, das gegenüber dem inneren Fenster ein äußeres Fenster zum Durchtritt von infraroter Strahlung aufweist. Im äußeren Gehäuse zwischen den beiden Fenstern befinden sich weitere optische Teile des verwendeten optischen Systems. Damit der Zwischenraum zwischen dem inneren und dem äußeren Gehäuse während der Messung konstant auf Umgebungstemperatur gehalten werden kann, wird Umgebungsluft angesaugt und in das äußere Gehäuse geblasen, so daß das Innengehäuse mit dem Detektor und den innenliegenden optischen Teilen auf Umgebungstemperatur des Meßobjektes gebracht wird. Aufgrund der dadurch erreichten Abschottung der bekannten Meßeinrichtung vor wechselnden thermischen Einflüssen ist sie gut geeignet, erhöhte Achstemperaturen zu messen. Fehlstrahlungen, die von den Innenwänden des inneren Gehäuses und der Optik innerhalb und außerhalb des inneren Gehäuses auf den Detektor gelangen und Detektorrauschen (Strahlungsrauschen) verursachen, können, bei der bekannten Meßeinrichtung nicht abgeschottet werden. Das ist hier auch nicht notwendig, weil Rauscheinflüsse bei auf Umgebungstemperatur gehaltenem Gehäuse die Messung relativ heißer Achslager nicht wesentlich behindert. Die Wahl der verwendeten Optik ist daher auch unabhängig von der mit der bekannten Meßvorrichtung verfolgten Zielsetzung. Durch die Zwischenabbildung des Wärmebildes auf die Ebene des inneren Fensters soll lediglich erreicht werden, daß das innere Shutterelement 7 relativ klein ausgebildet werden kann, das in Zeiträumen zwischen Messungen für die Achslagertemperaturen zur Messung der Umgebungstemperatur geschlossen gehalten wird. Die notwendige Konstanthaltung auch des inneren Shutterelements auf Umgebungstemperatur ist somit erleichtert, wenn dieses relativ klein ausgebildet ist. Die bekannte Meßeinrichtung, der jedes Kälteschild zur Abschirmung Planck'scher Strahlung fehlt, bietet somit keine Lösung zur weitgehenden Vermeidung von Detektorrauschen, zumal die Wahl eines relativ kleinen verschließbaren Shutterelementes und die Zwischenabbildung des Wärmebildes auf der Ebene des inneren Fenster vor dem Shutterelement bei der bekannten Meßeinrichtung aus Gründen gewählt sind, die mit der Abschirmung Planck'scher Strahlung in keinem Sinnzusammenhang steht.

Die FR-A-2 300 332 zeigt lediglich ein ungekühltes äußeres Kälteschild, das einem bekannten Dewar vorgeschaltet ist. Der Krümmungsmittelpunkt des äußeren Kälteschildes liegt auf dem Detektorelement. Es zeigte sich, daß Fehlstrahlungen, die von außen in das Dewar gelangen, hierdurch nicht in befriedigender Weise abgeschirmt werden können.

Aufgabe der Erfindung ist es, eine Detektoreinrichtung der eingangs genannten Art so auszubilden, daß von außerhalb des Abbildungsstrahleneinganges (Nutzstrahlung) im wesentlichen keine Infrarot-Störstrahlung auf den Detektor gelangen kann, insbesondere nicht von den Wandungen des Gehäuses und der Linsenfassungen. Dabei soll auch das durch die Störstrahlung verursachte Detektorrauschen weitgehend reduziert und die Helligkeit des Bildfeldes homogenisiert werden.

Bei einer Detektoreinrichtung der eingangs genannten Art wird die vorstehende Aufgabe erfindungsgemäß mit den kennzeichnenden Merkmalen des Anspruches 1 gelöst.

Vorteilhafte Ausführungen und Weiterbildungen ergeben sich aus den Merkmalen der abhängigen Ansprüche.

Hiernach bildet die Detektorlinse den optischen Strahl nicht direkt auf dem Detektorelement ab, sondern es erfolgt eine Zwischenabbildung in der von der ersten oder zweiten Strahleneintrittsöffnung des inneren bzw. äußeren Kälteschildes bestimmten Ebene, wobei die für die Zwischenabbildung verantwortliche erste optische Einrichtung außerhalb und die zweite optische Einrichtung zur Abbildung des Zwischenbildes auf dem Detektor, innerhalb oder außerhalb des inneren Kälteschildes angeordnet sein kann. Hierdurch sind nicht nur vorteilhafterweise verschiedene Möglichkeiten eröffnet, das Zwischenbild auf dem Detektorelement abzubilden. Dabei kann es weiterhin von Vorteil sein, die Strahleneintrittsöffnung, in deren Ebene die Zwischenabbildung erfolgt, mit einem engquerschnittigen Durchmesser von wengistens λ/4 der Wellenlänge des Nutzstrahles, insbesondere 0,1 bis 1 mm zu versehen.

Bei der erfindungsgemäßen Infrarot-Strahlungsdetektoreinrichtung werden vorteilhafterweise nur die Nutzstrahlen in der engquerschnittigen Strahleneintrittsöffnung konzentriert. Die Störstrahlen sind dort unscharf. Entsprechend werden die Störstrahlen stark gedämpft.

Vorteilhafterweise wird auch ein äußeres Kälteschild verwendet, das die eng querschnittige Strahleneintrittsöffnung im inneren Kälteschild auf sich selbst abbildet. Das heißt, die Öffnung wird spiegelbildlich in sich selbst abgebildet, wobei die Öffnung um ihr Zentrum gespiegelt ist.

Ein wesentlicher Vorteil der erfindungsgemäßen Einrichtung ist darin zu sehen, daß auch Störstrahlen ausgeblendet werden können, die unter einem sehr kleinen Winkel zur optischen Achse einfallen, was für die Verbesserung der Homogenität der Helligkeit des Infrarotbildes wesentlich ist.

Ein Vorteil der erfindungsgemäßen Einrichtung besteht schließlich auch darin, daß der Narzissus-Effekt praktisch vollkommen beseitigt ist, weil die kalten Gebiete, die sich an den Linsen spiegeln, wegen der sehr kleinen Strahleneintrittsöffnung sehr klein sind.

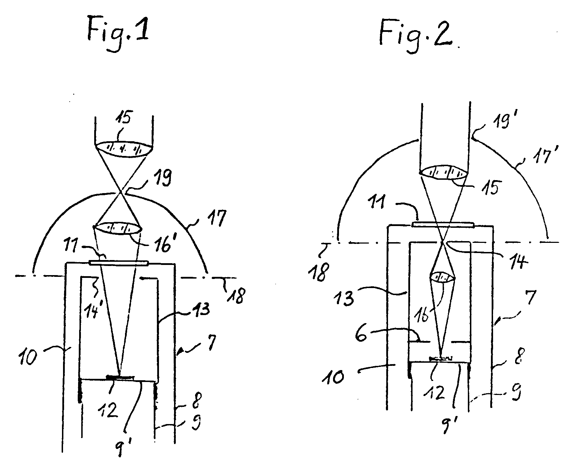

In der Zeichnung sind Ausführungsbeispiele nach der Erfindung in Figuren 1 bis 3 schematisch erläutert.

Fig. 1 zeigt ein doppelwandiges Detektor-Kühlgefäß 7, das nur teilweise dargestellt ist. Die äußere Wandung des Kühlgefäßes 7 ist mit 8 und die innere Wandung des Kühlgefäßes ist mit 9 bezeichnet. Die äußere und innere Wandung 8 und 9 begrenzen eine Vakuumkammer 10. Der Boden 9' der Vakuumkammer 10 an der inneren Wandung 9 ist mit einer nicht dargestellten, an sich bekannten Kühleinrichtung im wärmeleitenden Kontakt. Das vordere Ende der äußeren Wandung 8 weist ein Fenster 11, z.B. aus Germanium, auf, das für Infrarotstrahlung durchlässig ist. Innerhalb der Vakuumkammer 10 befindet sich am Boden 9' der inneren Wandung 9 ein Detektorelement 12 im wärmeleitenden Kontakt. Das Detektorelement 12 ist von einem inneren zylindrischen Strahlenabschirmkörper umgeben, der ein inneres Kälteschild 13 bildet, das mit seinem hinteren Ende an den Boden 9' der inneren Wandung 9 wärmeleitend angeschlossen ist. Das innere Kälteschild 13 besitzt an seinem vorderen Ende eine kleine Öffnung 14'. Die Innenseite des inneren Kälteschildes ist am besten geschwärzt. Es kann vorteilhaft sein, die äußere Stirnsteite metallisch blank und/oder thermisch isoliert auszubilden bzw. anzuordnen. Eine Verbesserung der Abschirmung kann noch dadurch erzielt werden, daß in dem inneren Kälteschild 13 wenigstens eine Blende 6 angeordnet ist, die dem Detektorelement 1 vorgeordnet ist.

Zusätzlich zu dem inneren Kälteschild 13 ist noch ein äußeres Kälteschild 17 vorhanden. Es handelt sich vorteilhafterweise um einen Kugelspiegel, dessen äußerer Rand in der Ebene 18 durch die Strahleneintrittsöffnung 14' in dem inneren Kälteschild 7 liegt. Das äußere Kälteschild, hier in Gestalt eines Kugelspiegels, ist derart ausgebildet und angeordnet, daß es die Öffnung 14' in sich selbst abbildet.

Das äußere Kälteschild 17 weist in seinem Zentrum eine kleine Öffnung 19 mit einem Durchmesser von beispielsweise 0,1 bis 1 mm auf. Der Durchmesser der Öffnung kann wesentlich kleiner sein bis zu einer Größe von λ/4 der Wellenlänge des Nutzstrahles. Zur Erzielung der erfindungsgemäßen Vorteile sollte der Durchmesser der Öffnung nicht größer als 1 mm sein. Es ist klar, daß gegenüber dem Stand der Technik auch schon Verbesserungen im Sinne der Erfindung erhalten werden, wenn der Durchmesser der Öffnung auch größer als 1 mm ist. Durch eine erste optische Einrichtung 15 wird das Infrarotbild in der Öffnung 19 abgebildet. Eine zweite optische Einrichtung 16', beispielsweise eine Linse, befindet sich hier zwischen dem äußeren 12 und dem inneren Kälteschild 13 und bildet das Zwischenbild auf dem Detektorelement 12 ab. Die Strahlen laufen dabei durch das Infrarotfenster 11 im Kühlgefäß 7 und die Strahleneintrittsöffnung 14' im inneren Kälteschild, die entsprechend groß ausgebildet ist.

Es ist dem Fachmann klar, daß die optische Einrichtung 16' nicht notwendigerweise eine Linse in der dargestellten Anordnung sein muß.

Die Ausführung nach Fig. 2 unterscheidet sich von der Ausführung nach Fig. 1 dadurch, daß das äußere Kälteschild 17' eine relativ große Durchtriffsöffnung 19' aufweist, durch die der parallele Strahlengang des Infrarotbildes hindurchtritt und durch die erste optische Einrichtung 15 in der kleinen Öffnung 14 des inneren Kälteschildes zwischenabgebildet wird. Das Zwischenbild wird über die zweite optische Einrichtung 16 auf dem Detektor 12 abgebildet. Es ist klar, daß die zweite optische Einrichtung 16 nicht notwendigerweise eine Linse in der dargestellten Anordnung sein muß.

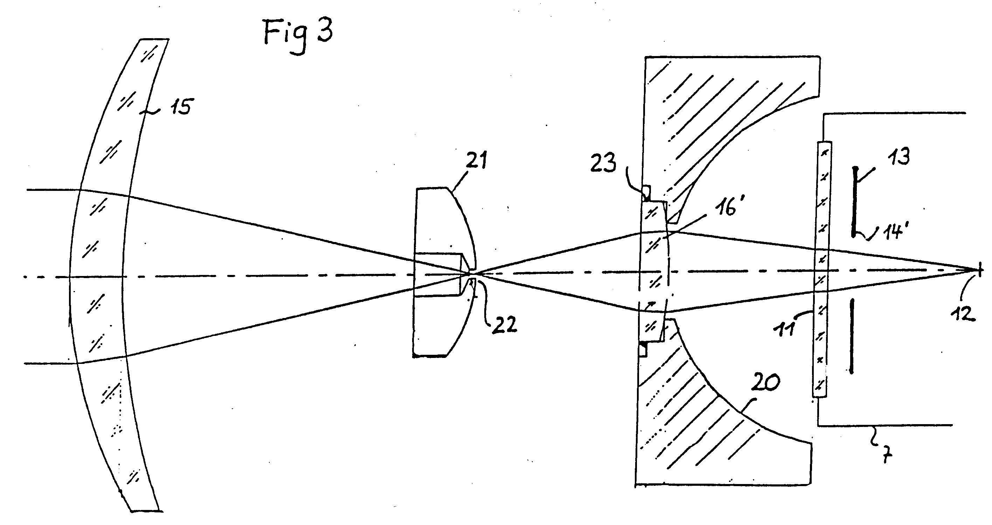

Fig. 3 zeigt noch eine weitere Ausführung nach der Erfindung. Hier ist das Kühlgefäß 7 mit dem Infrarotfenster 11 wiederum nur bruchstückartig dargestellt. Von dem inneren Kälteschld 13 ist nur die vordere Stirnfläche dargestellt, in der sich die Strahleneintrittsöffnung 14' befindet, die entsprechend wie in der Fig. 3 vergleichsweise relativ groß ist.

Die Ausführung nach Fig. 3 unterscheidet sich von den Ausführungen nach Fig. 1 und 2, daß das äußere Kälteschild aus einem Kugelspiegel 20 und einem vorgeschalteten negativ gekrümmten Spiegel 21 besteht, die axial hintereinander angeordnet sind. Der Spiegel 21 besitzt eine kleine Öffnung 22 vergleichbar mit der Öffnung 19 in Fig. 1 und 2. Eine als Linse 15 ausgebildete erste optische Einrichtung bildet den Strahlengang des Infrarotbildes in der Öffnung 22 zwischenab. Der Spiegel 20 besitzt eine zentrale Öffnung 23, in die die zweite optische Einrichtung in Gestalt der Linse 16' eingesetzt ist, die vergleichbar mit der Linse 16' in Fig. 1 das Zwischenbild auf dem Detektor 12 abbildet. Der Spiegel 20 bildet die Strahleneintrittsöffnung 14' in der vorderen Stirnfläche des inneren Kälteschildes 13 entsprechend Fig. 1 und 2 in sich selbst ab. Der Spiegel 21 und die Linse 16' sind zueinander derart angeordnet, daß sie ihrerseits die Strahleneintrittsöffnung in sich selbst abbilden. Die Anordnung der Linse 16' in der zentralen Öffnung 23 des Kugelspiegels 20 bietet gegenüber der Ausführung nach Fig. 1 den Vorteil, daß der Spiegel 20 die Strahleneintrittsöffnung 14', ungestört durch die Linse 16', in sich selbst abbilden kann. Der Spiegel 20 kann daher in Fig. 3 als Kugelspiegel ausgebildet sein, während der Spiegel 17 in Fig. 1 wegen der Linse 16' gegebenenfalls eine von der Kugelform abweichende Gestalt haben muß, um die Strahleneintrittsöffnung 14' trotz der nachgeschalteten Linse 16' in sich selbst abbilden zu können.

Entsprechend kann es vorteilhaft sein, die Linse 15 in Fig. 2 in der Öffnung 19' des Spiegels 17' anzuordnen, damit dieser entsprechend dem Spiegel 20 in Fig. 3 die Öffnung 14, ungestört durch die Linse 15, in sich selbst abbilden kann. Hierbei ist es dann vorteilhaft, der Linse 15 einen Spiegel entsprechend dem Spiegel 21 in Fig. 3 vorzuschalten, wobei dann, entsprechend wie in Fig. 3 die Linse 15 und der vorgeschaltete Spiegel 21 derart angeordnet und ausgebildet sind, daß sie die Öffnung 14 auf sich selbst abbilden.

Es ist klar, daß in Abhängigkeit von der Anordnung und Ausbildung der zweiten optischen Einrichtung 16' der Spiegel 21 auch eben oder positiv gekrümmt ausgebildet sein kann.

## Patentansprüche

1. Infrarot-Strahlendetektoreinrichtung mit
-- einern ein gekühltes Detektorelement (12) von Infrarotstrahlen weitgehend abschirmenden, eine erste Strahleneintrittsöffnung (14, 14') aufweisenden, inneren Kälteschild (2, 13),
-- einer ersten optischen Einrichtung (15) zur Zwischenabbildung des Infrarotbildes, und
-- einer zweiten optischen Einrichtung (5, 16, 16') zur Abbildung des Zwischenbildes auf dem Detektorelement,
**dadurch gekennzeichnet**, daß
-- zusätzlich mindestens ein dem inneren Kälteschild (2, 13) in Lichtrichtung vorgeschaltetes, ungekühltes äußeres Kälteschild (17, 17', 20 und 21) mit einer zweiten Strahleneintrittsöffnung (19, 19', 22) vorgesehen ist,
-- die Zwischenabbildung des Infrarotbildes in der ersten oder zweiten Strahleneintrittsöffnung liegt, und
-- die erste optische Einrichtung (15) außerhalb und die zweite optische Einrichtung (5, 16, 16') innerhalb oder außerhalb des inneren Kälteschildes (2, 13) angeordnet ist.

2. Einrichtung nach Anspruch 1, dadurch gekennzeichnet, daß die erste Strahleneintrittsöffnung (14, 14') einen Durchmesser von wenigstens λ/4 der Wellenlänge des Nutzstrahles, insbesondere etwa 0,1 bis 1 mm aufweist.

3. Einrichtung nach Anspruch 1, dadurch gekennzeichnet, daß die erste Strahleneintrittsöffnung (14) sich in einer Wandung des inneren Kälteschildes (13) befindet, und daß die zweite optische Einrichtung (16) innerhalb des inneren Kälteschildes (13) liegt.

4. Einrichtung nach Anspruch 1, dadurch gekennzeichnet, daß die zweite Strahleneintrittsöffnung (19, 22) sich in einer Wandung des äußeren Kälteschildes (17, 20 und 21) befindet und die zweite optische Einrichtung (16') im äußeren Kälteschild (20, 21) oder zwischen dem äußeren und dem inneren Kälteschild (13) liegt.

5. Einrichtung nach Anspruch 1, 2 oder 3, dadurch gekennzeichnet, daß die erste optische Einrichtung (15) in der zweiten Strahleneintrittsöffnung (19') des äußeren Kälteschildes (17') oder zwischen dem äußeren oder inneren Kälteschild liegt.

6. Einrichtung nach einem der Ansprüche 1 bis 5, dadurch gekennzeichnet, daß das äußere Kälteschild (17, 17', 20 und 21) wenigstens aus einer dritten optischen Einrichtung besteht, die die zweite Strahleneintrittsöffnung (14, 14') auf sich selbst abbildet.

7. Einrichtung nach einem der Ansprüche 1 bis 6, dadurch gekennzeichnet, daß das äußere Kälteschild (20, 21) aus einer dritten (20) und einer vierten (21) hintereinander geschalteten optischen Einrichtung besteht, wobei sich die engquerschnittige Strahleneintrittsöffnung (22) in der gegenüber dem Detektorelement (12) entfernt liegenden vierten optischen Einrichtung (21) befindet, in der die Zwischenabbildung erfolgt und wobei die zweite optische Einrichtung (16') zur Abbildung des Zwischenbildes auf dem Detektorelement (12) in einer Strahleneintrittsöffnung der dritten optischen Einrichtung (20) angeordnet ist.

8. Einrichtung nach Anspruch 7, dadurch gekennzeichnet, daß die zweite (16') und die vierte (21) optische Einrichtung die erste Strahleneintrittsöffnung (14') des inneren Kälteschildes (13) auf sich selbst abbilden.

9. Einrichtung nach einem der vorstehenden Ansprüche, dadurch gekennzeichnet, daß die erste optische Einrichtung (15) wenigstens aus einer Linse besteht.

10. Einrichtung nach einem der vorstehenden Ansprüche, dadurch gekennzeichnet, daß die zweite optische Einrichtung (16, 16') wenigstens aus einer Linse besteht oder von Spiegeln gebildet ist.

11. Einrichtung nach Anspruch 6, dadurch gekennzeichnet, daß die dritte optische Einrichtung, d.h. das äußere Kälteschild, wenigstens aus einem Spiegel (17, 17', 20) besteht.

12. Einrichtung nach den Ansprüchen 6 und 7, dadurch gekennzeichnet, daß die dritte optische Einrichtung (20) ein konkaver Hohlspiegel und die vierte optische Einrichtung (21) ein konvexer Spiegel ist und daß die zweite, zur Abbildung des Zwischenbildes auf dem Detektorelement (12) vorgesehene optische Einrichtung (16') in der Strahleneintrittsöffnung (23) der dritten optischen Einrichtung (20) wenigstens aus einer Linse besteht.

13. Einrichtung nach einem der vorstehenden Ansprüche, dadurch gekennzeichnet, daß das innere Kälteschild (13) wenigstens eine Blende (6) aufweist, die dem Detektorelement unmittelbar vorgeschaltet ist.

## Claims

1. Infrared radiation detector apparatus with
- an inner cold shield (2, 13) extensively shielding a cooled detector element (12) from infrared radiation, and having a first radiation entry opening (14, 14'),
- a first optical arrangement (15) for intermediate imaging of the infrared image, and
- a second optical arrangement (5, 16, 16') for imaging the intermediate image on the detector element,
characterised in that
- there is provided in addition at least one uncooled outer cold shield (17, 17', 20 and 21), preceding the inner cold shield (2, 13) in the direction of the light, and with a second radiation entry opening (19, 19', 22),
- the intermediate imaging of the infrared image lies in the first or second radiation entry opening, and
- the first optical arrangement (15) is located outside, and the second optical arrangement (5, 16, 16') is located inside or outside, the inner cold shield (2, 13).

2. Apparatus according to claim 1, characterised in that the first radiation entry opening (14, 14') has a diameter of at least λ/4 of the wavelength of the effective beam, in particular approximately 0.1 to 1 mm.

3. Apparatus according to claim 1, characterised in that the first radiation entry opening (14) is located in a wall of the inner cold shield (13), and in that the second optical arrangement (16) lies inside the inner cold shield (13).

4. Apparatus according to claim 1, characterised in that the second radiation entry opening (19, 22) is located in a wall of the outer cold shield (17, 20 and 21), and the second optical arrangement (16') lies in the outer cold shield (20, 21) or between the outer and the inner cold shield (13).

5. Apparatus according to claims 1, 2 or 3, characterised in that the first optical arrangement (15) lies in the second radiation entry opening (19') of the outer cold shield (17'), or between the outer or inner cold shield.

6. Apparatus according to one of claims 1 to 5,
characterised in that the outer cold shield (17, 17', 20 and 21) comprises at least a third optical arrangement which images the second radiation entry opening (14, 14') on itself.

7. Apparatus according to one of claims 1 to 6,
characterised in that the outer cold shield (20, 21) comprises a third (20) and a fourth (21) optical arrangement, incorporated one behind the other, the small cross-section radiation entry opening (22) being located in the fourth optical arrangement (21), which is remote from the detector element (12), the intermediate imaging taking place in said fourth optical arrangement (21), the second optical arrangement (16') being located in a radiation entry opening of the third optical arrangement (20), in order to image the intermediate image on the detector element (12).

8. Apparatus according to claim 7, characterised in that the second (16') and the fourth (21) optical arrangements image the first radiation entry opening (14') of the inner cold shield (13) on themselves.

9. Apparatus according to one of the preceding claims, characterised in that the first optical arrangement (15) comprises at least a lens.

10. Apparatus according to one of the preceding claims, characterised in that the second optical arrangement (16, 16') comprises at least a lens, or is formed by mirrors.

11. Apparatus according to claim 6, characterised in that the third optical arrangement, i.e. the outer cold shield comprises at least a mirror (17, 17', 21).

12. Apparatus according to claims 6 and 7, characterised in that the third optical arrangement (20) is a concave mirror, and the fourth optical arrangement (21) is a convex mirror, and in that the second optical arrangement (16'), provided in order to image the intermediate image on the detector element (12), in the radiation entry opening (23) of the third optical arrangement (20), comprises at least a lens.

13. Apparatus according to one of the preceding claims, characterised in that the inner cold shield (13) has at least one diaphragm (6) which immediately precedes the detector element.

## Revendications

1. Appareil de détection de rayonnement infrarouge, comportant :
-- un bouclier froid intérieur (2, 13) qui présente une première ouverture d'entrée de rayons (14, 14') et qui abrite très amplement des rayons infrarouges un élément détecteur refroidi (12);
-- un premier dispositif optique (15) pour former une image infrarouge intermédiaire; et
-- un deuxième dispositif optique (5, 16, 16') pour former sur l'élément détecteur l'image de l'image intermédiaire,
caractérisé par le fait que
-- il est prévu, en plus, au moins un bouclier froid extérieur (17, 17', 20 et 21) comportant une deuxième ouverture (19, 19', 22) d'entrée de rayons, non refroidi et disposé sur la direction de la lumière avant le bouclier froid (2, 13);
-- l'image infrarouge intermédiaire se situe dans la première ou la deuxième ouverture d'entrée des rayons; et
-- le premier dispositif optique (15) est disposé à l'extérieur et le deuxième dispositif optique (5, 16, 16') à l'intérieur ou à l'extérieur du bouclier froid intérieur (2, 13).

2. Appareil selon revendication 1, caractérisé par le fait que la première ouverture (14, 14') d'entrée de rayons présente un diamètre d'au moins λ/4, quart de la longueur d'onde du rayonnement utile, notamment de l'ordre de 0,1 à 1 mm.

3. Appareil selon revendication 1, caractérisé par le fait que la première ouverture (14) d'entrée de rayons se trouve dans une paroi du bouclier froid intérieur (13), et que le deuxième dispositif optique (16) se trouve à l'intérieur du bouclier froid intérieur (13).

4. Appareil selon la revendication 1, caractérisé par le fait que la deuxième ouverture (19, 22) d'entrée de rayons se trouve dans une paroi du bouclier froid extérieur (17, 20 et 21), et le deuxième dispositif optique (16') est situé dans le bouclier froid extérieur (20, 21) ou entre le bouclier extérieur et le bouclier froid intérieur (13).

5. Appareil selon revendication 1, é ou 3, caractérisé par le fait que le premier dispositif optique (15) est situé dans la deuxième ouverture (19') d'entrée de rayons du bouclier froid extérieur (17'), ou entre le bouclier froid extérieur ou intérieur.

6. Appareil selon l'une des revendications 1 à 5, caractérisé par le fait que le bouclier froid extérieur (17, 17', 20 et 21) est constitué d'au moins un troisième dispositif optique qui forme l'image de la deuxième ouverture (14, 14') d'entrée de rayons sur cette dernière.

7. Appareil selon l'une des revendications 1 à 6, caractérisé par le fait que le bouclier froid extérieur (20, 21) est constitué d'un troisième (20, et d'un quatrième (21) dispositif optique disposés l'un à la suite de l'autre, l'ouverture (22) d'entrée de rayons ayant une faible section se trouvant dans le quatrième dispositif optique (21) qui occupe une position éloignée par rapport à l'élément détecteur (12), la formation d'image intermédiaire s'effectuant dans ce quatrième dispositif optique, et le deuxième dispositif optique (16') pour former l'image intermédiaire sur l'élément détecteur (12) étant agencé dans une ouverture d'entrée de rayons du troisième dispositif optique (20).

8. Appareil selon revendication 7, caractérisé par le fait que le deuxième (16') et le quatrième (21) dispositif optique forment l'image de la première ouverture d'entrée de rayons (14') du bouclier froid intérieur (13) sur cette ouverture même.

9. Appareil selon l'une des revendication précédentes, caractérisé par le fait que le premier dispositif optique (15) est constitué par au moins une lentille.

10. Appareil selon l'une des revendications précédentes, caractérisé par le fait que le deuxième dispositif optique (16, 16') est constitué par au moins une lentille ou est formé de miroirs.

11. Appareil selon revendication 6, caractérisé par le fait que le troisièùe dispositif optique, c est-à-dire le bouclier froid extérieur, est constitué d'au moins un miroir (17, 17', 20).

12. Appareil selon les revendications 6 et 7, caractérisé par le fait que le troisième dispositif optique (20) est un miroir concave et le quatrième dispositif optique (21) un miroir convexe, et par le fait que le deuxième dispositif optique (16') dans l'ouverture (23) d'entrée de rayons du troisième dispositif optique (20) prévu pour former sur l'élément détecteur (12) l'image de l'image intermédiaire est constitué d'au moins une lentille.

13. Appareil selon l'une des revendications précédentes, caractérisé par le fait que le bouclier froid intérieur (13) présente au moins un diaphragme (6) qui est disposé immédiatement devant l'élément détecteur.
